# EUROPEAN PATENT SPECIFICATION

(11) **EP 3 176 891 B1**
(45) Date of publication and mention of the grant of the patent: **06.06.2018**
(21) Application number: 15197370.8
(22) Date of filing: 01.12.2015
(51) Int. Cl.: H02G 3/32

(54) **MOUNTING ASSEMBLY AND KIT FOR A MOUNTING ASSEMBLY**
MONTAGEANORDNUNG UND KIT FÜR EINE MONTAGEANORDNUNG
ENSEMBLE DE MONTAGE ET KIT POUR UN ENSEMBLE DE MONTAGE

(43) Date of publication of application: 07.06.2017
(73) Proprietor: Tyco Electronics UK Limited, Swindon, Wiltshire SN3 5HH (GB)
(72) Inventor: MacNaughton, Roy, Swindon, Wiltshire SN1 4LT (GB); Kopinski, Tomasz, Swindon, Wiltshire SN3 1QA (GB)
(74) Representative: Grünecker Patent- und Rechtsanwälte PartG mbB

(56) References cited:
- DE-U1-202015 100 360
- US-A1- 2014 014 775

## Description

The invention relates to a mounting assembly for mounting at least one cable on an electrically conductive structure. The conductive structure can in particular be the fuselage of an airplane.

In order to protect the structure from electric arcing or short-circuits in the event that insulation of the cable is damaged, current systems use insulating caps that are mounted on metallic mounting elements like rivets or bolts. However, it is possible to mount the cable even if these caps are not in place, for example if they have not been mounted during the assembly. This poses a potential risk as a direct line of sight between the damaged cable and a metallic mounting element is available.

From US 2014/0014775 A1, an apparatus for mounting lines in an aircraft is known in which cable holder devices are clipped onto a slide in which a connecting element can be slid, to which mounting elements can be mounted, wherein the connecting element can be fixed to the slide by a screw. From DE 20 2015 100 360 U1, a cable holder is known in which a cable holding element is slid onto a mounting element.

It is the object of the invention to provide a solution that is safer without compromising the simplicity of handling the device.

This object is achieved by a mounting assembly for mounting at least one cable on an electrically conductive structure, comprising a mounting bracket that comprises at least one mounting element receptacle adapted to receive at least one mounting element for mounting the mounting bracket to the electrically conductive structure and that further comprises at least one cable holder device receptacle adapted to receive at least one cable holder device for holding the at least one cable and the mounting assembly further comprising a cover that is mounted on the mounting bracket, wherein the mounting bracket and the cover are moveable relative to each other from a bracket mounting position to a cable mounting position, wherein in the bracket mounting position, at least one mounting element receptacle is accessible from a cover side of the mounting bracket and at least one cable holder device receptacle is covered by the cover, and wherein in the cable mounting position all mounting element receptacles are covered by the cover and at least one cable holder device receptacle is accessible from a cover side of the bracket.

A kit according to the invention comprises a mounting bracket and a cover.

In the bracket mounting position, the mounting bracket can be mounted to the electrically conductive structure via the at least one mounting element receptacle and a mounting element, such as a rivet or a bolt, in the mounting element receptacle. The mounting of the cable to the mounting bracket is not possible, at least not completely, in this bracket mounting position.

In the cable mounting position, the cable holder device receptacle is accessible so that the cable holder device can be mounted. Further, in the cable mounting position, all mounting element receptacles are covered.

The cover thus fulfills the function of the insulating cap and prohibits access to the mounting elements. Following installation, the cover prohibits access to the mounting elements and provides an insulating barrier between the cable and the electrically conductive structure. Hence, the structure is protected from electrical arcing in the event that a cable is damaged as no direct line of sight from the cable to the mounting element is available.

The inventive solution can be improved by the following further improvements and advantageous embodiments, which are advantageous on their own and can be combined arbitrarily as desired.

Advantageously, all the mounting element receptacles are accessible from a cover side of the mounting bracket in the bracket mounting position. This allows mounting of all the mounting elements in the bracket mounting position. As an alternative, not all the mounting element receptacles can be used for mounting, at least in particular mounting situations. Some of the mounting element receptacles can remain unfilled even in the cable mounting position. The mounting bracket can, for example, comprise several mounting element receptacles that serve for mounting the mounting bracket to different electrically conductive structures or to different locations on the electrically conductive structure. In this case, only mounting element receptacles that are necessary for a particular mounting situation can be accessible in the bracket mounting position. Different covers can be used for different mounting situation together with a single version of a mounting bracket. Mounting element receptacles that are not necessary for a particular mounting situation can then be covered in the bracket mounting position.

It is also possible to have more than one bracket mounting position. For example, the first mounting element receptacle can be accessible in the first bracket mounting position and a second mounting element receptacle can be accessible in a second bracket mounting position. This allows a stepwise mounting of the bracket.

The mounting bracket might comprise several mounting element receptacles for mounting to different electrically conductive structures or to different locations on the electrically conductive structure. Which mounting element receptacle is filled with a mounting element can thus depend on the mounting situation.

In a preferred embodiment, all cable holder device receptacles are accessible from a cover side of the bracket in the cable mounting position. The mounting bracket can have more than one cable holder device receptacle. These cable holder device receptacles can serve to receive different types of cable holder devices, for example for cable ties or for cable clips.

In one possible embodiment, the mounting assembly has more than one cable mounting position. For example, in the first cable mounting position, the cable holder device receptacles for a first type of cable holder devices are accessible and in the second cable mounting position, the cable holder device receptacles for a second type of cable holder devices are accessible.

The mounting bracket and the cover can be rotatable relative to each other. The mounting assembly can be adapted to be rotated from the mounting bracket mounting position to the cable mounting position.

As an alternative or in addition, the mounting bracket and the cover can be slidable relative to each other. The mounting assembly can be adapted to be slid from the mounting bracket mounting position to the cable mounting position by a sliding movement. Such a movement can be simple and space-saving. The movement can particularly be a linear movement. As an alternative, the movement can be curved or comprise several linear movements that are at an angle to each other.

The mounting assembly can comprise a guiding means for guiding the mounting assembly from the bracket mounting position to the cable mounting position. This guiding means can, in particular, be adapted for a sliding movement. It can comprise protrusions and recesses.

In order to allow the mounting by a screw, a bolt or a rivet, the mounting element receptacle can comprise a through-hole. The mounting element receptacle can also comprise a space for a head of the screw, the bolt or the rivet. The through-hole can be circular. It can comprise cylindrical sections that can take up a cylindrical section of the screw, the bolt or the rivet.

The cable holder device receptacle can comprise a through-hole for example for cable holder devices that comprise screws, bolts or rivets.

In another advantageous embodiment, the cable holder device receptacle can comprise at least two through-holes so that for example, a cable tie can be guided to a back side and back to a front side. The two can be located at a same length along a length direction in which the cable runs in the mounting position. This allows a tight and precise fixation of the cable.

The cover can comprise through holes that are aligned with through holes in the mounting bracket in the cable mounting position. The through-holes in the cover and in the mounting bracket can serve as cable holder device receptacles. The alignment of cable holder device receptacles in the mounting bracket with the through-holes in the cover can lead to an automatic securing of the mounting assembly in the cable mounting position. For example, cable holder devices like cable ties can be inserted through the through-holes in the cover and the mounting bracket in the cable mounting position. A movement out of the cable mounting position can thus be automatically blocked by the cable ties so that the mounting assembly is secured in the cable mounting position.

In order to allow the mounting of already existing cable holder devices in the form of cable clips, the cable holder device receptacle can be a socket for a cable clip.

As an alternative or additional solution for retaining the mounting assembly in the cable mounting position, the mounting assembly can comprise a latch that is adapted for retaining the mounting assembly in the cable mounting position. The latch can for example, be ramp like. It can have a plane that is inclined relative to a movement direction and a second plane that is basically perpendicular to the movement direction. At least a part of the latch can be elastically deflectable.

The mounting assembly can further comprise at least one cable holder device for the cable and the cable holder device can block the mounting assembly from moving from the cable mounting position to the bracket mounting position when it is mounted to the mounting bracket. This allows an easy and automatic securing of the mounting assembly in the cable mounting position.

In order to provide a cover that is stable and provides a big support area for the cable, the cover can comprise at least one access hole for accessing the mounting elements through the cover. In an alternative, laterally open cut outs or end sections of the cover can be used for blocking or granting access to the mounting element receptacles.

The mounting assembly can also comprise screws, bolts, rivets, cable ties or cable clips.

The mounting bracket and/or the cover can be made from insulating material-like plastic. They can be moulded components that have been produced by injection moulding.

In order to keep the manufacturing simple, the mounting bracket can be a monolithic piece. Similarly, the cover can also be a monolithic piece. Functional elements like guiding elements or latches can be integral with the remainder of the cover and/or the mounting bracket.

Advantageously, the cover forms a channel or a trough for the at least one cable to give good support. The cover can have a U-shaped and/or C-shaped cross section to limit movement to the sides.

The mounting bracket and/or the cover can comprise a holding means for holding the mounting bracket and the cover together. This holding means can for example, comprise latches that hold the two together once they are attached to each other.

In the following, the inventive solutions will be explained in more detail and with reference to the drawings. The features shown in the further developments and advantageous embodiments can be combined as desired and are advantageous on their own.

In the figures:
- Figs. 1A to 1C: show perspective views of the mounting of a cable to an electrically conductive structure by a first embodiment of a mounting assembly;
- Figs. 2A and 2B: show exploded views of the first embodiment of a mounting assembly;
- Figs. 3A to 3E: show the first embodiment of a mounting assembly in different perspective views in the bracket mounting position;
- Figs. 4A to 4E: show the first embodiment of a mounting assembly in different perspective views in the cable mounting position;
- Figs. 5A to 5D: show top views and cross sections of the first embodiment in the bracket mounting position and in the cable mounting position;
- Figs. 6A and 6B: show two cross sections of the first embodiment of a mounting assembly together with a first embodiment of a cable holder device;
- Fig. 7: shows a front view of the embodiment of Fig. 6A;
- Figs. 8A to 8C: show the first embodiment of a mounting assembly together with a second embodiment of a cable holder device;
- Fig. 9: shows an end view of the embodiment of Fig. 8C;
- Fig. 10: shows a front view of the embodiment of Fig. 8C;
- Figs. 11A and 11B: show a second embodiment of a mounting assembly in the bracket mounting position and in the cable mounting position, respectively;
- Figs. 12A and 12B: show exploded views of the second embodiment of a mounting assembly;
- Figs. 13A to 13E: show the second embodiment of a mounting assembly in different perspective views in the bracket mounting position;
- Figs. 14A to 14E: show the second embodiment of a mounting assembly in different perspective views in the cable mounting position;
- Figs. 15A and 15B: show the second embodiment of a mounting assembly together with a third embodiment of a cable holder device;
- Fig. 16: shows a schematic perspective view of the embodiment of Fig. 15A and 15B;
- Fig. 17A and 17B: show the second embodiment of a mounting assembly together with a third embodiment of a cable holder device and bobbins; and
- Fig. 18: shows the embodiment of Fig. 17A and 17B in a perspective view.

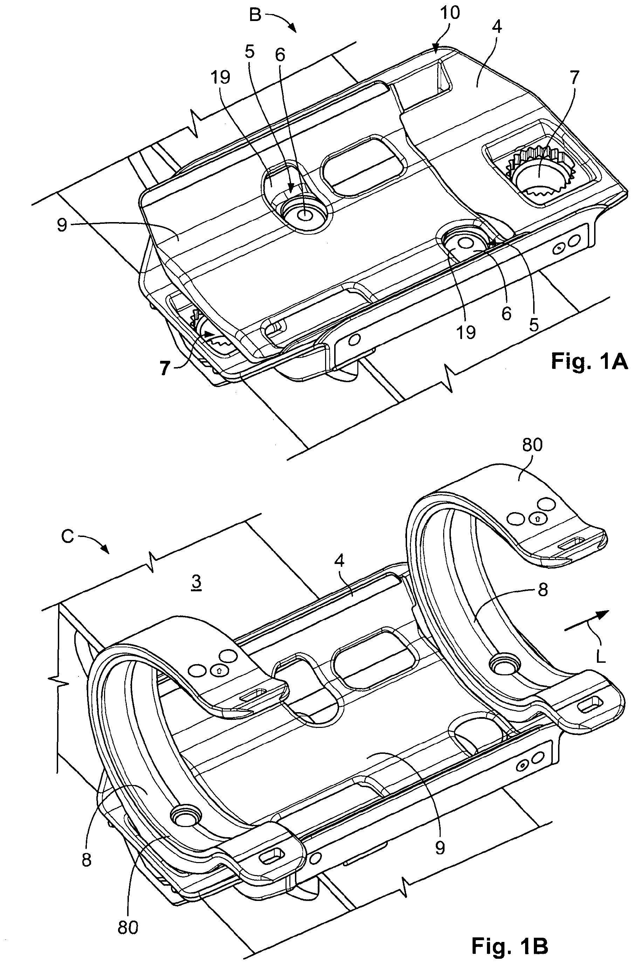

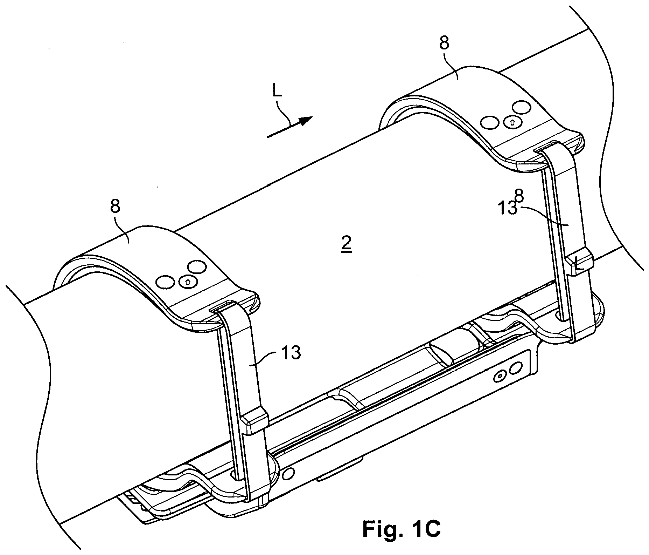

In Figs. 1A to 1C, the mounting of a cable 2 to an electrically conductive structure 3 via a first embodiment of a mounting assembly 1 is shown. The electrically conductive structure 3 can for example, be located in a fuselage of an airplane. In order to protect the structure from arcing or short-circuits in the event that cable 2 is damaged, the mounting assembly 1 is to be designed such that no direct line of sight is available between the cable 2 and mounting elements 6 in the mounted position shown in Fig. 1C.

In Fig. 1A, the mounting assembly 1 is shown in the bracket mounting position B. The mounting bracket 4 is mounted to the electrically conductive structure 3 via mounting elements 6 inserted into mounting element receptacles 5 in the bracket 4. Such a mounting is possible due to access holes 19 in the cover 9 through which access to the mounting element receptacles 5 is possible in the bracket mounting position B from a cover side 10 of the mounting bracket 4.

To prohibit a mounting of the cable holder devices 8, which are designed as cable clips 80 in the bracket mounting position B, one of the cable holder device receptacles 7 is covered by the cover 9 so that access to this cable holder device receptacle 7 is not possible.

Once the bracket 4 is mounted to the electrically conductive structure 3, the cover 9 is slid relative to the mounting bracket 4 from the bracket mounting position B to the cable mounting position C shown in Fig. 1B in which the cover 9 covers the mounting element receptacles 5 and the mounting elements 6 located therein. In the cable mounting position C, both cable holder device receptacles 7 are accessible. In Fig. 1B the cable holder devices 8 are already inserted in the cable holder device receptacles 7.

In the cable mounting position C, one of the cable holder devices 8 blocks a movement of the cover 9 from the cable mounting position back to the bracket mounting position B. Thus, the mounting element receptacles 5 and the mounting elements 6 located therein are only accessible when no cable 2 is attached.

Once the cable holder devices 8 are mounted, the cable 2 is inserted into the cable holder devices 8. The cable holder devices 8 are then closed with cable ties 13. The cable 2 is then fixed within the cable holder devices 8.

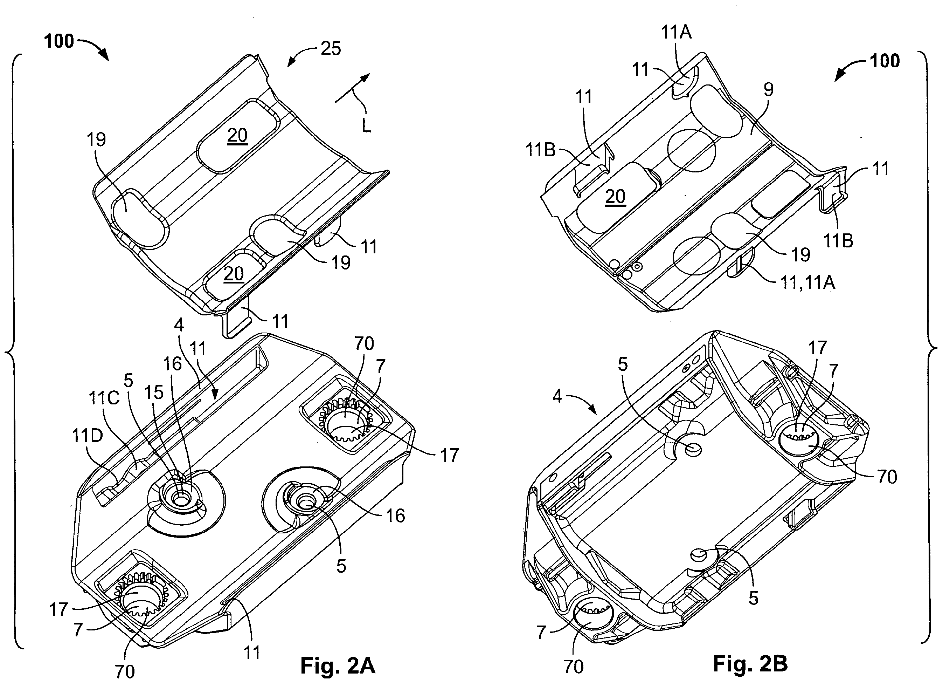

In Figs. 2A and 2B, the first embodiment of a mounting assembly 1 is depicted in an exploded view from above and from below. This position can be seen as a pre-mounting position which precedes the bracket mounting position B shown in Fig. 1A. To come to the bracket mounting position B, the cover 9 can be clipped to the mounting bracket 4. The mounting bracket 4 and the cover 9 are then held together by latches 11B on the cover 9 that interact with corresponding surfaces on the mounting bracket 4.

The latches 11B are also a part of a guiding means 11 for guiding the cover 9 relative to the mounting bracket 4. The guiding means 11 allow a linear movement of the two relative to each other.

The guiding means 11 further comprises tabs 11A to guide the movement of two parts. The tabs 11A have a rounded lower part that allows a smooth movement. When moving from the mounting bracket position the to the cable mounting position C, the tabs 11A have to move over bumps 11C and come to rest in troughs 11D. Once the tabs 11A are in the troughs 11D, the mounting assembly 1 is at least preliminarily held in the cable mounting position C.

Each mounting element receptacle 5 is designed as a through-hole 15 and comprises in an upper part an extended head space 16 that is extended relative to a lower part of the mounting element receptacle 5 and that serves to receive a head of a mounting element 6 like a bolt, a screw or a rivet.

The cable holder device receptacles 7 are also through-holes 17. They are designed as sockets 70 for cable clips 80. They comprise in their top parts teethed circumferences that block a rotation of the cable clips 80.

The mounting bracket 4 and the cover 9 are made from insulating material like plastic. They have been produced by injection moulding.

The cover 9 also comprises weight reduction holes 21 which mainly serve to reduce the weight without sacrificing too much stability. These weight reduction holes 20 can also serve as receptacles for fingers or tools when the mounting assembly 1 is moved from the bracket mounting position B to the cable mounting position C or back.

The cover 9 defines a trough or a channel 25 for the cable 2. The cable 2 is thus held perpendicular to a longitudinal direction L.

The figures only show a single cable 2. However, the mounting assemblies 1 can also be used for two or more cables 2 or a bundle of cables 2.

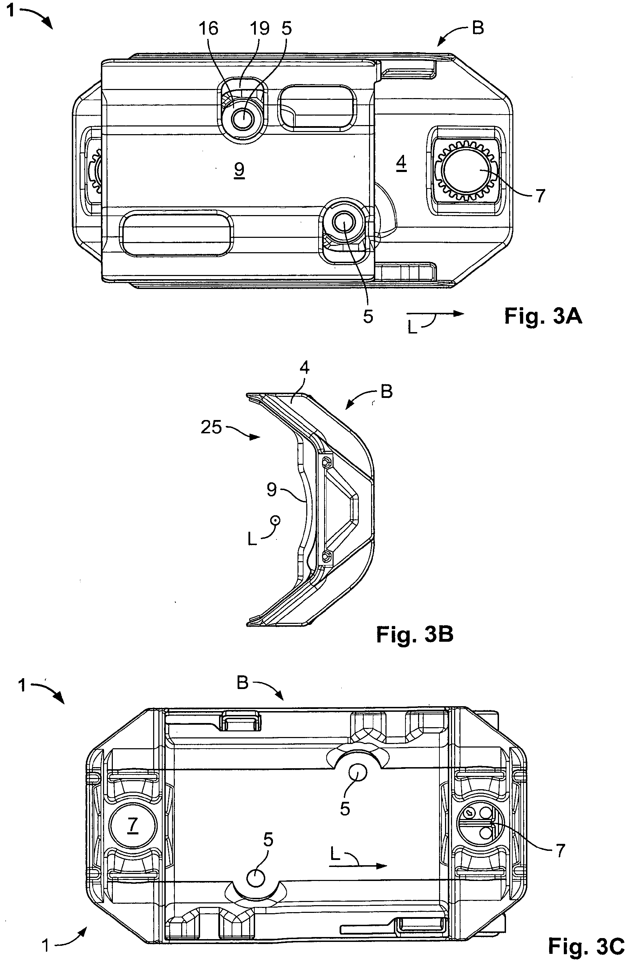

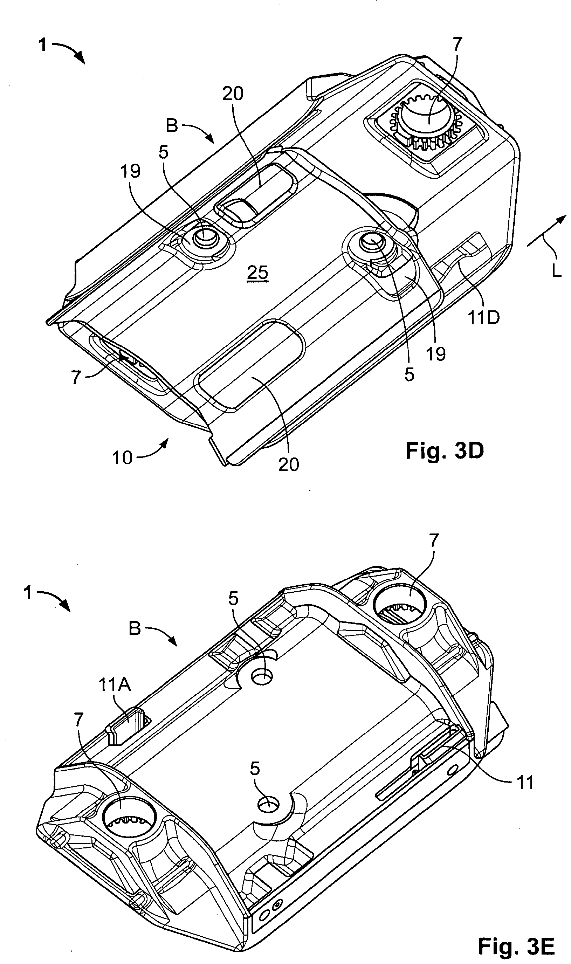

In Figs. 3A to 3E, the first embodiment of the mounting assembly 1 is shown from different viewpoints in the bracket mounting position B. All the mounting element receptacles 5 are accessible in this position. This mounting bracket 4 comprises only two mounting element receptacles 5. In other versions, the mounting bracket 4 could also have more than 2 mounting element receptacles 5. For example, it could have two pairs of mounting element receptacles 5 wherein each pair is adapted for mounting to a specific location on the electrically conductive structure 3. In this case, different covers 9 could be used for different mounting situations. The cover 9 would then only have to provide access to the mounting element receptacles 5 that are actually used for the corresponding mounting situation. Other mounting element receptacles 5 could be covered. This could, for example, prevent an incorrect mounting from occurring.

In the embodiment shown here, only one cable holder device receptacle 7 is covered in the bracket mounting position B. In other embodiments, all cable holder device receptacles 7 could be covered in the bracket mounting position B to avoid that even a single cable holder device 8 is attached.

This embodiment comprises two cable holder device receptacles 7. Similar to the situation above, a mounting bracket can, for example, also comprise more than two cable holder device receptacles. It can for example comprise two pairs of cable holder device receptacles 7 for different cable holder devices 8.

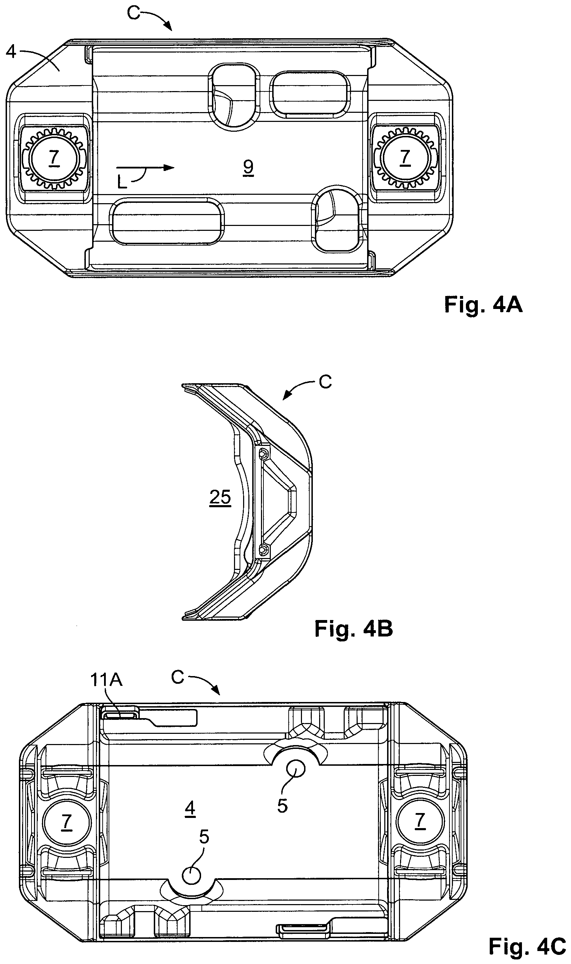

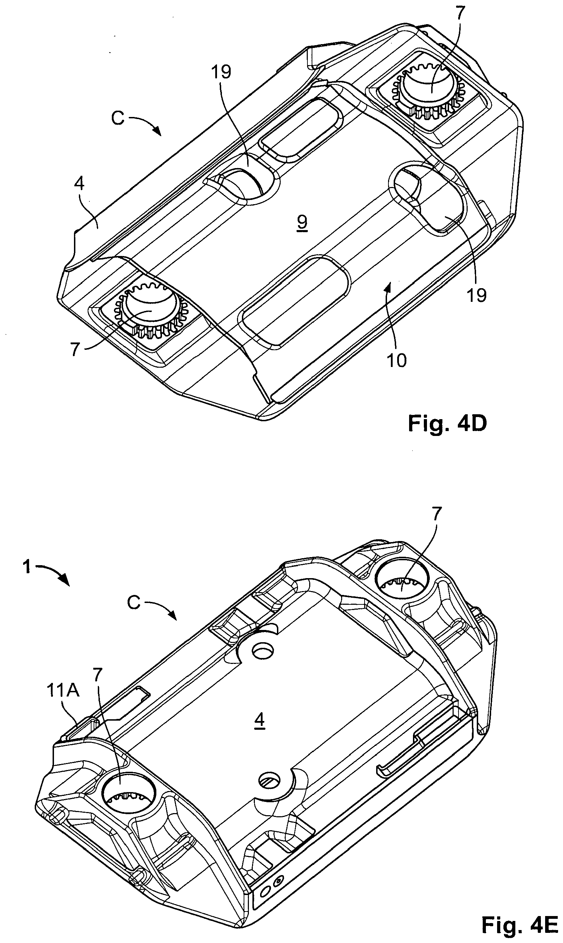

In Figures 4A to 4E, the first embodiment of the mounting assembly 1 is shown from different viewpoints in the cable mounting position C. The mounting element receptacles 5 are covered and not accessible from a cover side 10. The cable holder devices receptacle 7 is accessible from the cover side 10.

In other embodiments that comprise more than two mounting element receptacles 5 all mounting element receptacles 5 are covered in the cable mounting position C, even including the ones that are not used.

Similarly, if the mounting assembly 1 comprises more than two cable holder device receptacle 7, only the ones that are needed in the current mounting situation can be accessible, for example, in order to avoid a potentially dangerous incorrect assembly. Different covers 9 can be used for different mounting situations. However, to keep the number of variants low, only a single cover can be used that can for example, grant access to all the cable holder device receptacles 7 in the cable mounting position C.

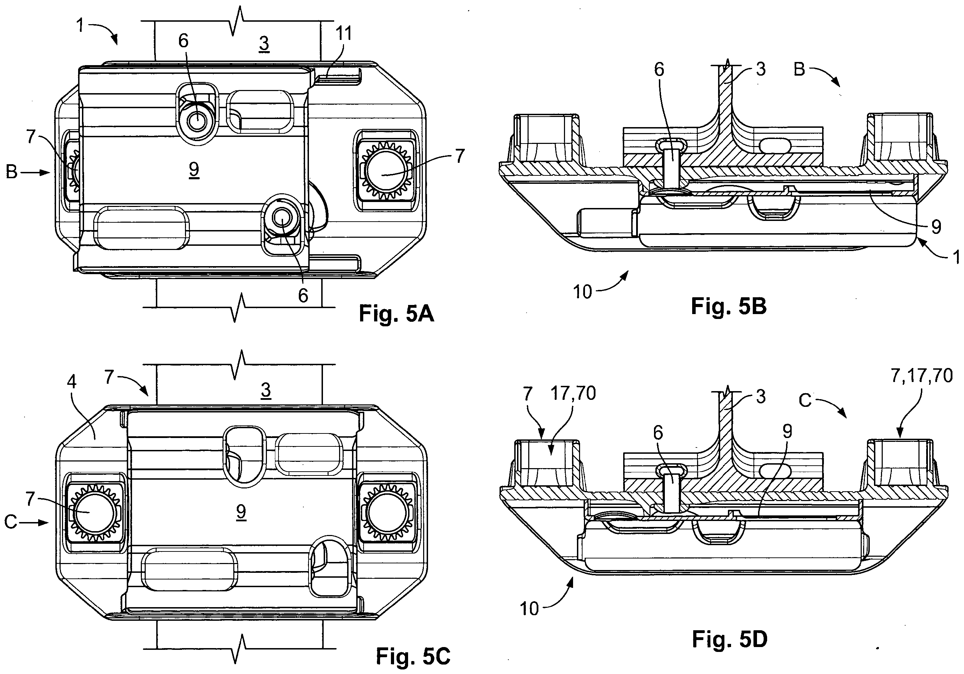

Figs. 5A and 5B again show the first embodiment of the mounting assembly 1 in the bracket mounting position B. As can be seen in the cross section shown in Fig. 5B, a rivet is used as a mounting element 6 for attaching the mounting assembly 1 to the electrically conductive structure 3. In Fig. 5C and 5D, the mounting assembly 1 is again shown in the cable mounting position C. The cover 9 blocks access to the rivet from a cover side 10.

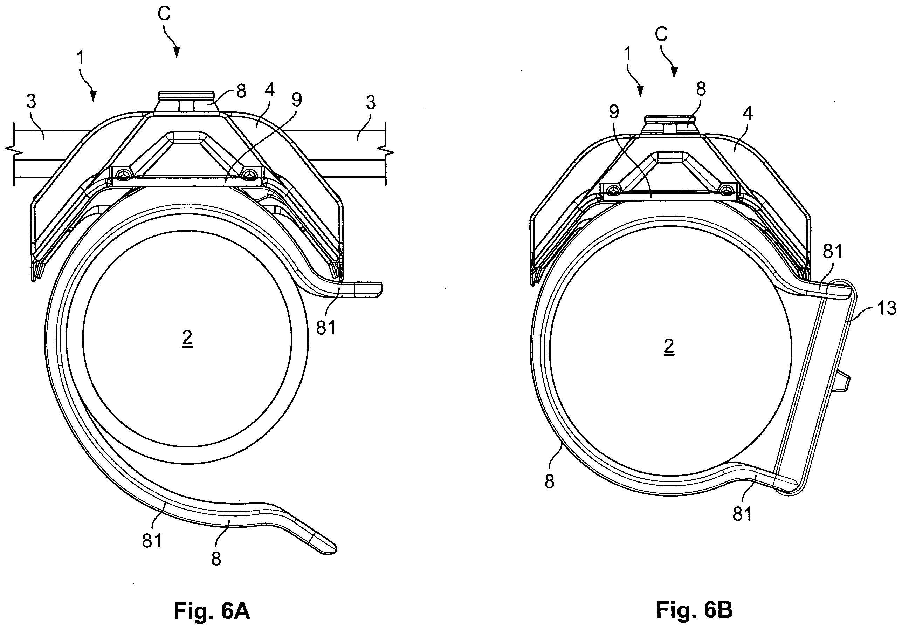

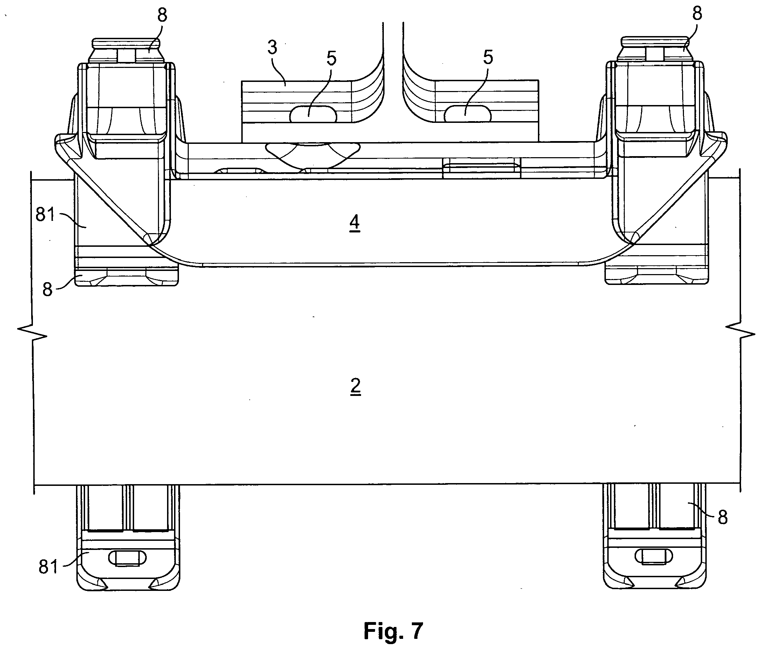

Figs. 6A, 6B and 7 show details of the cable holder devices 8. In this case, the cable holder devices 8 are cable clips 80 into which the cable 2 can be inserted at right angles to the fixation axis of the cable clip. Once the cable 2 or a bundle of cables 2 have successfully been inserted, legs 81 are pulled toward each other by a cable tie 13. The cable clips 80 can accommodate cables 2 of different sizes.

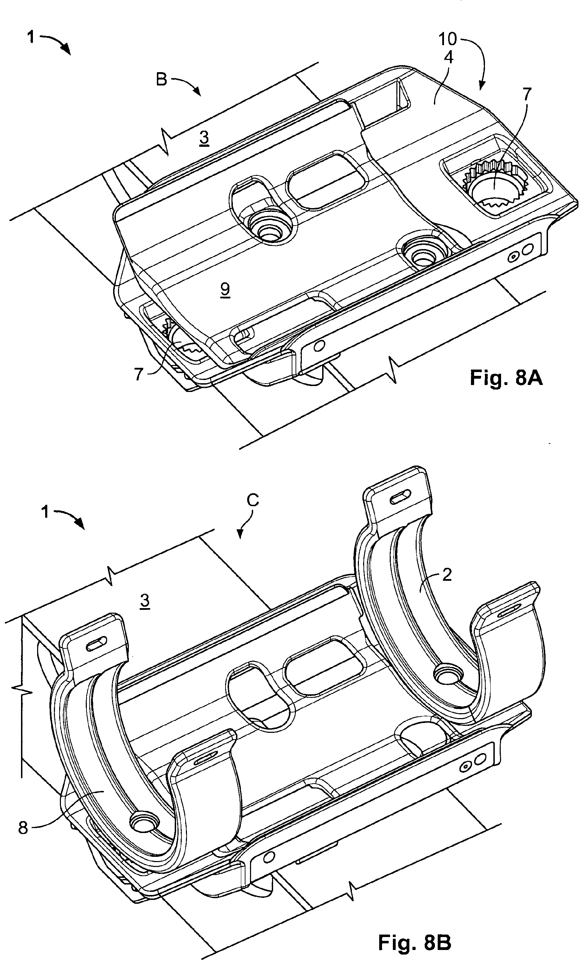

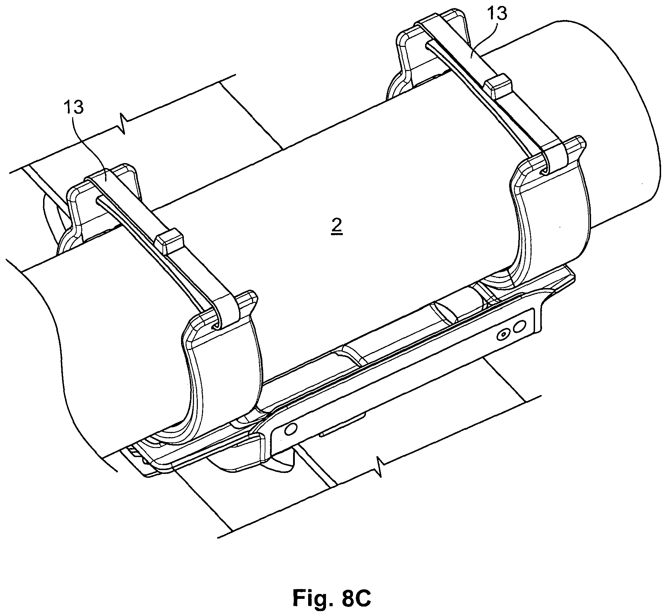

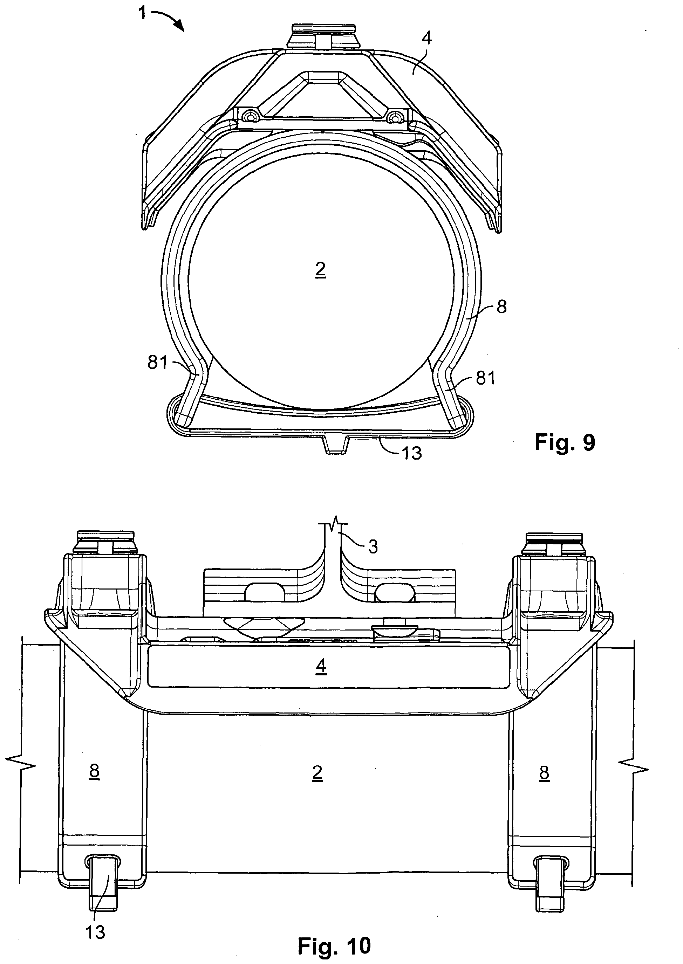

In Figs. 8A to 8C, the mounting bracket 4 and the cover 9 are used together with another embodiment of a cable clip 80. This version of a cable clip 80 allows the insertion of a cable 2 in line with the fixation axis of the cable clip. The details of this second version of a cable clip 80 serving as a cable holder device 8 are shown in Figures 9 and 10. Again, two legs 81 are connected via a cable tie 13.

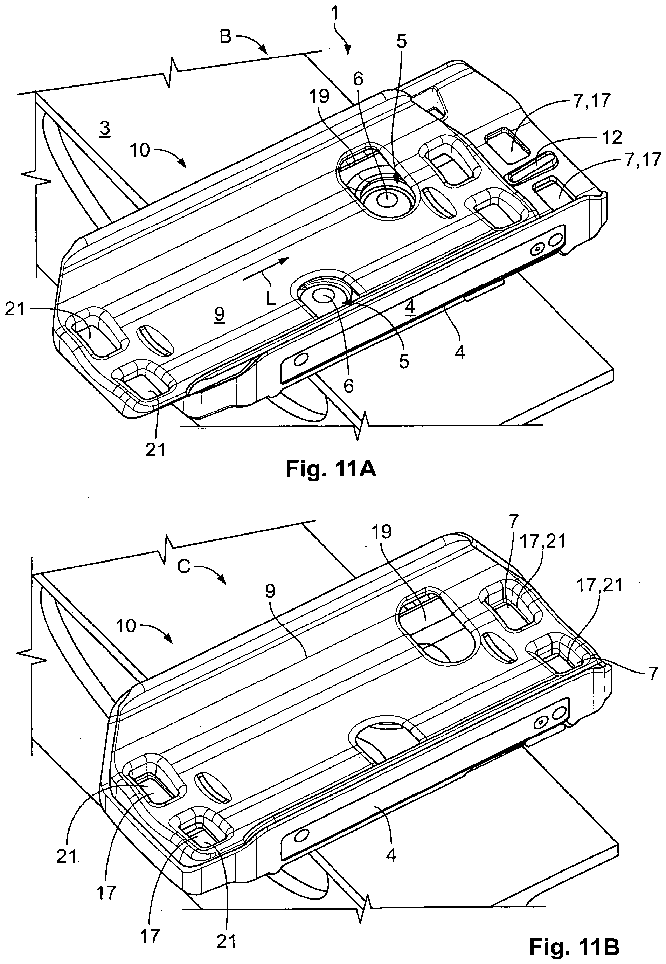

In Figs. 11A and 11B, the bracket mounting position B and the cable mounting position C of the second embodiment of a mounting assembly 1 are shown.

In the bracket mounting position C of Fig. 11A, access to the mounting element receptacles 5 is again, possible. The mounting bracket 4 is already mounted to the electrically conductive structure 3 via mounting elements 6 inserted in the mounting element receptacles 5. Access to these mounting element receptacles 5 is possible through through-holes 19 in the cover 9. Once the mounting elements 6 are mounted, the mounting assembly 1 is brought into the cable mounting position C by sliding the cover 9 along a longitudinal direction L linearly relative to the mounting bracket 4. In the cable mounting position C, the mounting element receptacles 5 are covered by the cover and the cable holder device receptacles 7 are accessible from a cover side 10. The cable holder device receptacles 7 are aligned with through-holes 21 in the cover 9. On each side of the mounting assembly 1, one pair of cable holder device receptacles 7 is located. A cable tie 13 can then run from the upper side of the mounting assembly 1 to the lower side of the mounting assembly 1 through one cable holder device receptacle 7 and back to the upper side through the other cable holder device receptacle 7. The two through-holes 21, 17 of one pair are located at the same length along the longitudinal direction in which the cable runs.

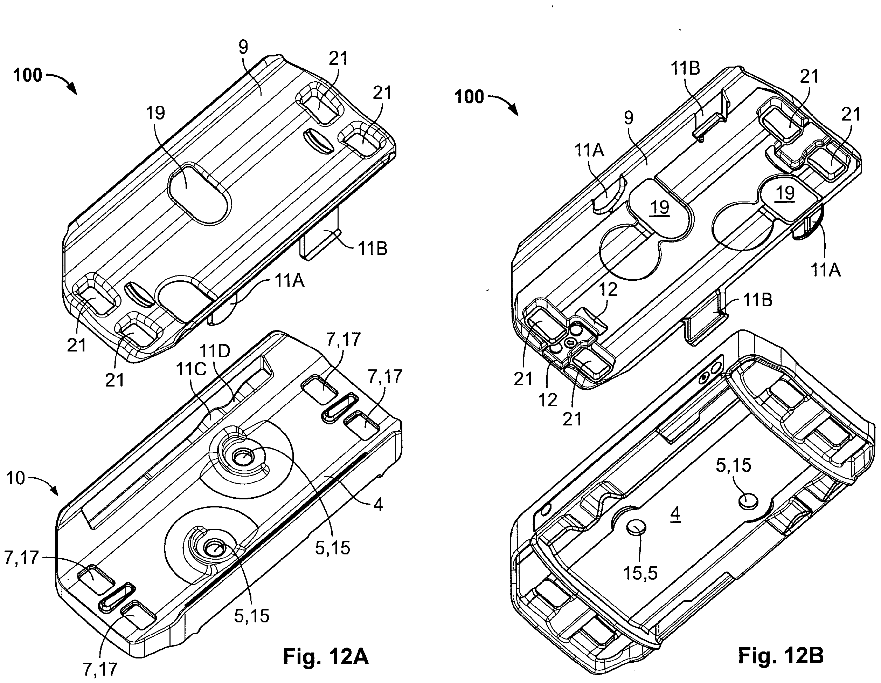

In Figs. 12A and 12B the mounting assembly 1 is shown in exploded views from above and below. The mounting bracket 4 and the cover 9 represent a kit 100 for a mounting assembly 1. The mounting assembly 1 is in a pre-mounting position and can be brought into the bracket mounting position B by clipping the cover 9 to the mounting bracket 4.

The cover 9 again comprises access holes 19 providing access to the mounting element receptacles 5 in the bracket mounting position B. In other embodiments, access to the mounting element receptacles 5 can for example, be possible through recesses or cutouts that do not necessarily have to be through-holes. In an even simpler embodiment, the provision and blocking of access to a mounting element receptacle 5 can be achieved by sliding an end part the cover 9 over mounting element receptacle 5.

The mounting assembly 1 comprises two latches 12 for retaining the mounting assembly 1 in the cable mounting position C. Each latch 12 comprises a first part on the mounting bracket 4 with a ramp or a wedge that is inclined relative to the longitudinal direction L and a stop surface at the end of the ramp for interacting with a corresponding stop surface on the cover 9.

Similar to the first embodiment, the cover of the second embodiment of the mounting assembly 1 is a monolithic piece. It is only one single piece on which all the functionalities of the cover 9 are located. Similarly, the mounting bracket 4 is also a monolithic piece. The monolithic construction allows an easy manufacturing by injection moulding and without further assembling steps.

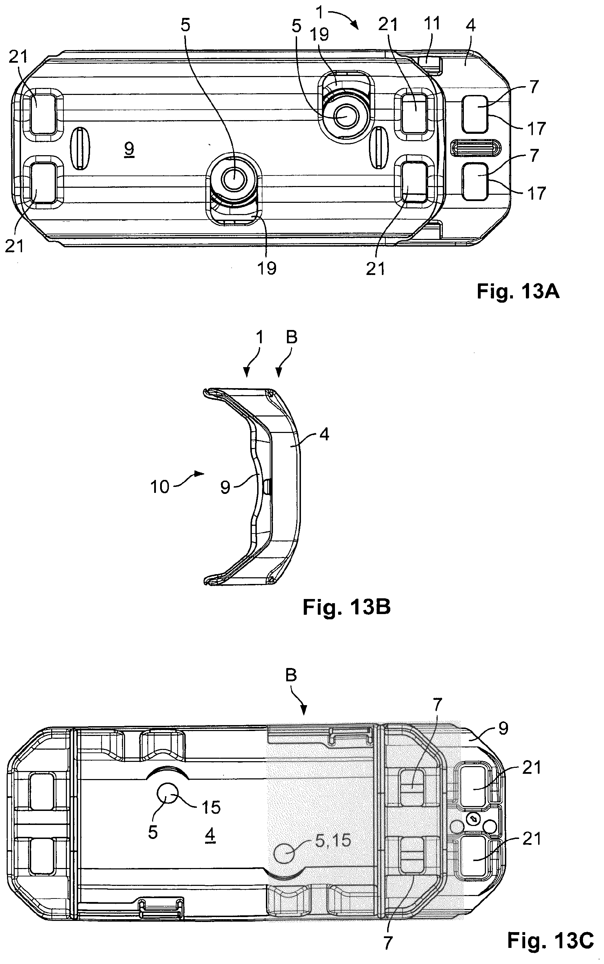

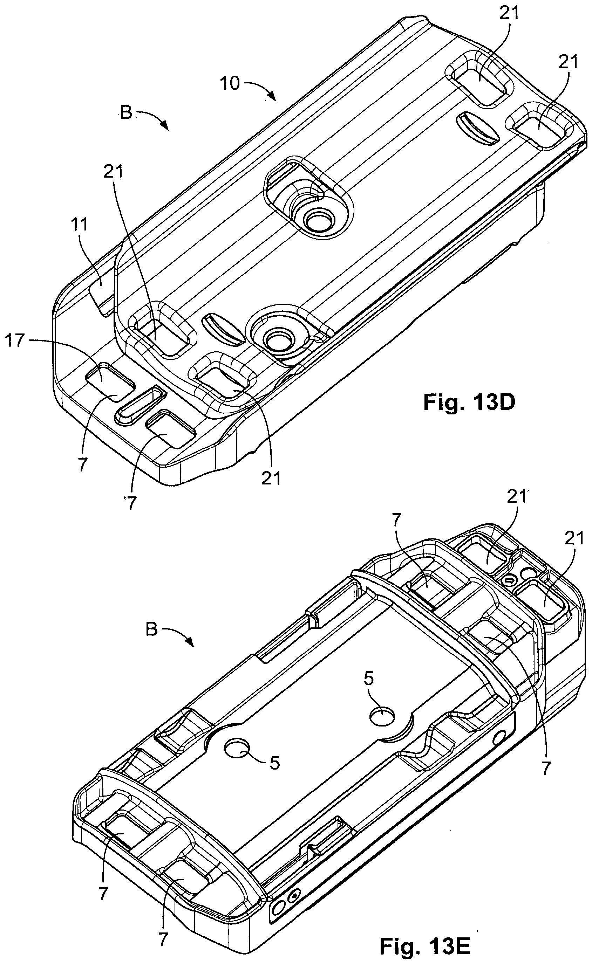

In Figs. 13A to 13E, the second embodiment of the mounting assembly 1 is shown in the bracket mounting position B from different viewpoints. As can, for example, be seen in Fig. 13 C, two of the cable holder device receptacles 7 are covered in the bracket mounting position B by the cover 9 so that no access from the cover side 10 is possible. In a non-depicted further development, the cover 9 could also cover the second pair of cable holder device receptacles 7, for example with a shield-like continuous part that extends further to the right in Fig. 13A. In order to avoid an incorrect mounting of the cable ties 13 to the through-holes 21 in the cover 9 in the bracket mounting position B, the mounting bracket 4 could also extend further to the left ("left" as shown in Fig. 13A) so as to cover the through-holes 21 from below in a non-depicted further development.

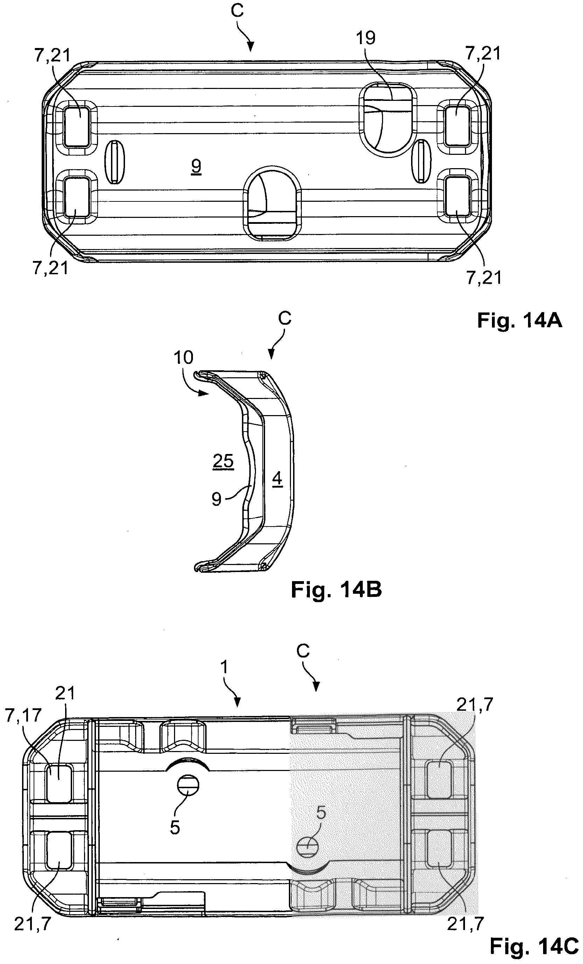

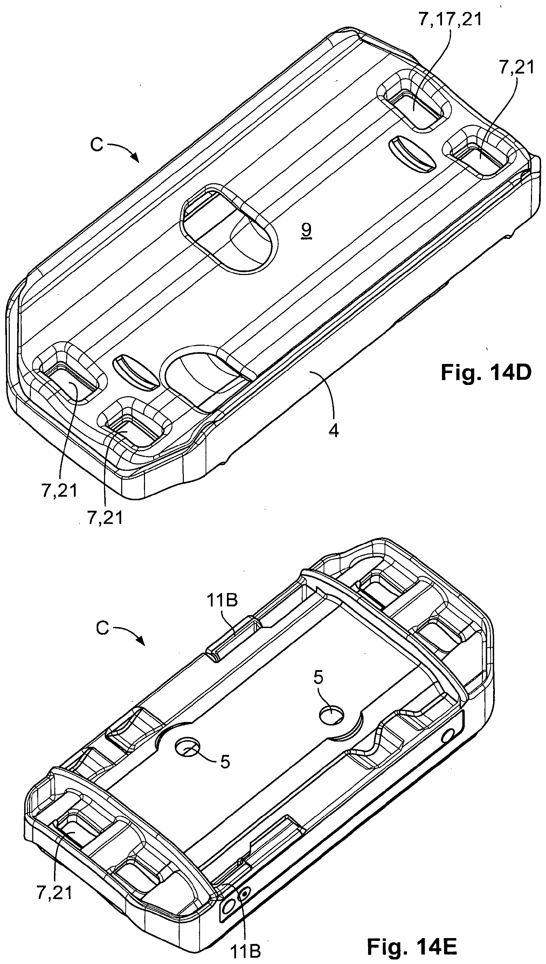

In Figs. 14A to 14C, the second embodiment of a mounting assembly 1 is shown in the cable mounting position C from different viewpoints. The mounting element receptacles 5 are covered by the cover 9 so that they are inaccessible from a cover side 10. The cable holder device receptacles 7 are accessible from the cover side 10.

Similar to the first embodiment of the mounting assembly 1, the second embodiment of the mounting assembly 1 is not restricted to having the number of mounting element receptacles 5 and cable holder device receptacles 7 shown in these figures. There could be more or less of these receptacles 5, 7 which can, in particular, be used for mounting to different locations on the electrically conducting structure 3 or for attaching different types of cable holder devices 8. Again, which cable holder device receptacles 7 and mounting element receptacles 5 are accessible or blocked in the cable mounting position C and in the bracket mounting position B, depends on which of the mounting element receptacles 5 and cable holder device receptacle 7 are actually used in a particular mounting situation.

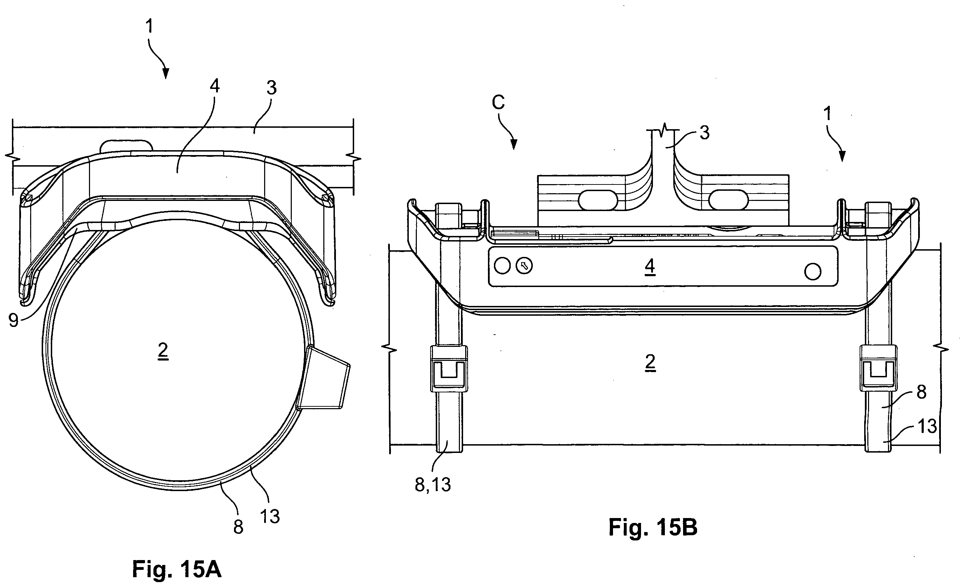

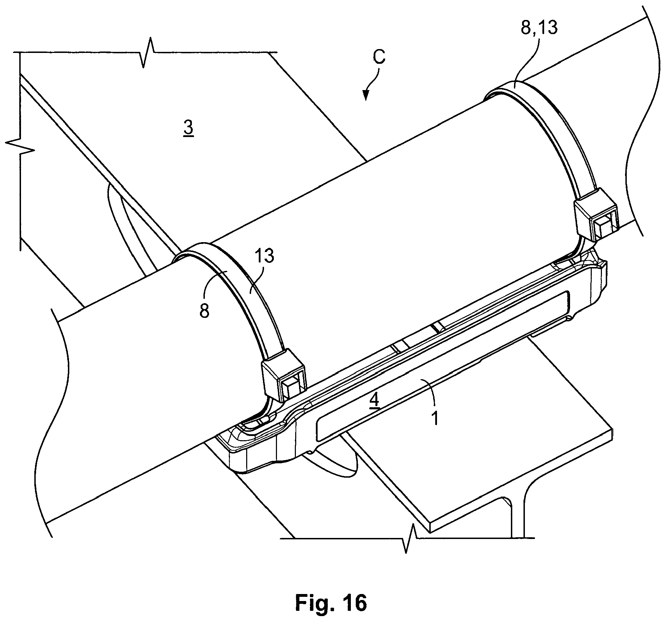

In Figs. 15A, 15B and 16, the second embodiment of a mounting assembly 1 is shown together with cable ties 13 that are used as cable holder devices 8. The cable ties 13 run through the cover 9, the mounting bracket 4 and around the cable 2. The fact that the cable ties 13 run through the cover 9 and the mounting bracket 4 also blocks the movement of the two relative to each other out of the cable mounting position C.

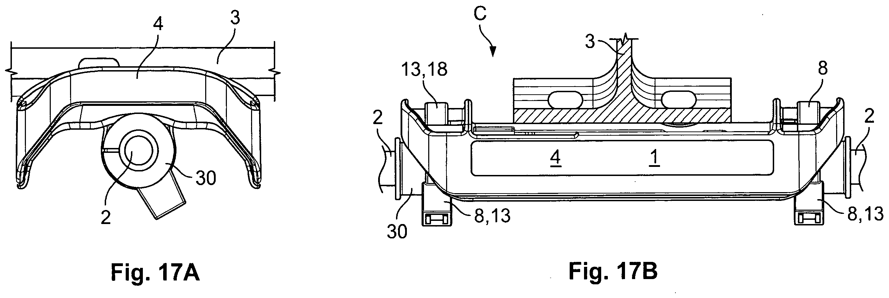

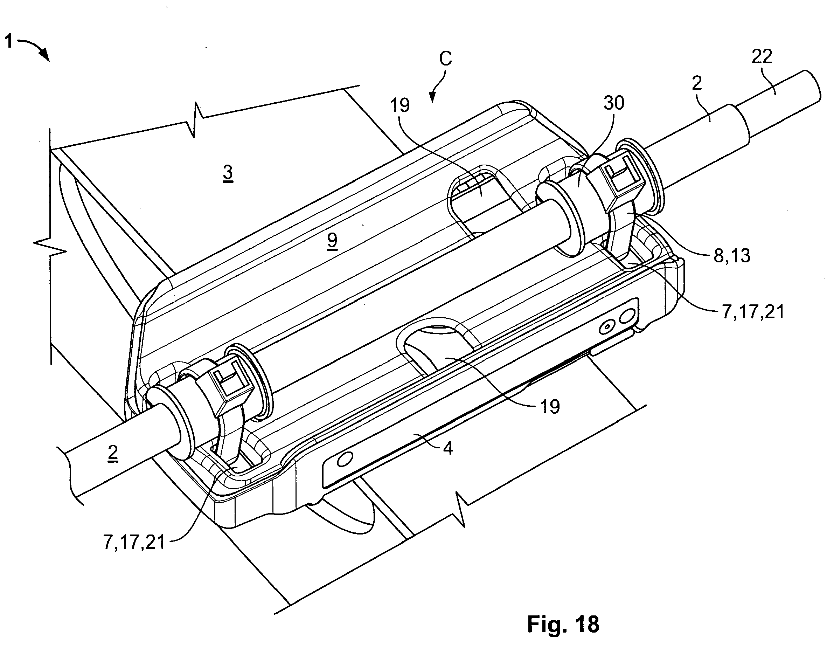

The second embodiment of a mounting assembly 1 together with two cable ties 13 as cable holder devices 8 is shown in Fig. 17A, 17B and 18, wherein in this case, a smaller cable 2 is mounted. Bobbins 13 are attached to the cable 2 so that the cable 2 is not deformed by the force exerted by the cable ties 13.

### REFERENCE NUMERALS

- 1: mounting assembly
- 2: cable
- 3: electrically conductive structure
- 4: mounting bracket
- 5: mounting element receptacle
- 6: mounting element
- 7: cable holder device receptacle
- 8: cable holder device
- 9: cover
- 10: cover side
- 11: guiding means
- 11A: tab
- 11B: latch
- 11C: bump
- 11D: trough
- 12: latch
- 13: cable tie
- 15: through-hole
- 16: head space
- 17: through-hole
- 19: access hole
- 20: weight reduction hole
- 21: through-hole
- 22: conductor
- 30: bobbin
- 70: socket
- 80: cable clip
- 81: leg
- 100: kit

- B: bracket mounting position
- C: cable mounting position
- L: longitudinal direction

## Claims

1. Mounting assembly (1) for mounting at least one cable (2) on an electrically conductive structure (3), comprising a mounting bracket (4) that comprises at least one mounting element receptacle (5) adapted to receive at least one mounting element (6) for mounting the mounting bracket (4) to the structure (3) and that further comprises at least one cable holder device receptacle (7) adapted to receive at least one cable holder device (8) for holding the at least one cable (2) and the mounting assembly (1) further comprising a cover (9) that is mounted on the mounting bracket (4), wherein the mounting bracket (4) and the cover (9) are moveable relative to each other from a bracket mounting position (B) to a cable mounting position (C), wherein in the bracket mounting position (B) at least one mounting element receptacle (5) is accessible from a cover side (10) of the mounting bracket (4) and at least one cable holder device receptacle (7) is covered by the cover (9), and wherein in the cable mounting position (C) all mounting element receptacles (5) are covered by the cover (9) and at least one cable holder device receptacle (7) is accessible from a cover side (10) of the mounting bracket (4).

2. Mounting assembly (1) according to claim 1, wherein the mounting bracket (4) and the cover (9) are slidable relative to each other.

3. Mounting assembly (1) according to claim 1 or claim 2, wherein the mounting assembly (1) comprises a guiding means (11) for guiding the mounting assembly (1) from the bracket mounting position (B) to the cable mounting position (C) by a sliding movement.

4. Mounting assembly (1) according to one of claims 1 to 3, wherein in the bracket mounting position (B) all the mounting element receptacles (5) are accessible from a cover side (10) of the mounting bracket (4).

5. Mounting assembly (1) according to one of claims 1 to 4, wherein in the cable mounting position (C) all cable holder device receptacles (7) are accessible from a cover side (10) of the mounting bracket (4).

6. Mounting assembly (1) according to one of claims 1 to 5, wherein in the bracket mounting position (B) all cable holder device receptacles (7) are covered by the cover (9).

7. Mounting assembly (1) according to one of claims 1 to 6, wherein the mounting element receptacle comprises a through-hole.

8. Mounting assembly (1) according to one of claims 1 to 7, wherein the cable holder device receptacle (7) comprises a through-hole (17).

9. Mounting assembly (1) according to one of claims 1 to 8, wherein the cover (9) comprises through-holes (19) that are aligned with through-holes (17) in the mounting bracket (4) in the cable mounting position (C).

10. Mounting assembly (1) according to one of claims 1 to 9, wherein the cable holder device receptacle (7) is a socket (70) for a cable clip (80).

11. Mounting assembly (1) according to one of claims 1 to 10, wherein the mounting assembly (1) comprises a latch (12) adapted for retaining the mounting assembly (1) in the cable mounting position (C).

12. Mounting assembly (1) according to one of claims 1 to 11, wherein the mounting assembly (1) further comprises at least one cable holder device (8) for the cable (2) and the cable holder device (8) blocks the mounting assembly (1) from moving from the cable mounting position (C) to the bracket mounting position (B) when it is mounted to the mounting bracket (4).

13. Mounting assembly (1) according to one of claims 1 to 12, wherein the cover (9) comprises at least one access hole (19) for accessing the mounting elements through the cover.

14. Mounting assembly (1) according to one of claims 1 to 13, wherein the cover (9) provides an insulating barrier between the cable (2) and the electrically conductive structure (3) to protect the electrically conductive structure (3) from electrical arcing or short circuits in the event that a cable is damaged as no direct line of sight from the cable (2) to the mounting element (6) is available.

15. Kit (100) for a mounting assembly (1) according to one of claims 1 to 14 comprising a mounting bracket (4) and a cover (9).

## Patentansprüche

1. Montageanordnung (1) zum Montieren wenigstens eines Kabels (2) an einer elektrisch leitenden Struktur (3), die einen Montageträger (4) umfasst, der wenigstens eine Montageelement-Aufnahme (5) umfasst, die zum Aufnehmen wenigstens eines Montageelementes (6) zum Montieren des Montageträgers (4) an der Struktur eingerichtet ist, und der des Weiteren wenigstens eine Kabelhaltervorrichtungs-Aufnahme (7) umfasst, die zum Aufnehmen wenigstens einer Kabelhaltervorrichtung (8) eingerichtet ist, mit der das wenigstens eine Kabel (2) gehalten wird, und die Montageanordnung (1) des Weiteren eine Abdeckung (9) umfasst, die an dem Montageträger (4) angebracht ist, wobei der Montageträger (4) und die Abdeckung (9) relativ zueinander von einer Träger-Montageposition (B) an eine Kabel-Montageposition (C) bewegt werden können, in der Träger-Montageposition (B) wenigstens eine Montageelement-Aufnahme (5) von einer Abdeckungs-Seite (10) des Montageträgers (4) aus zugänglich ist und wenigstens eine Kabelhaltervorrichtungs-Aufnahme (7) durch die Abdeckung (9) abgedeckt wird, und in der Kabel-Montageposition (C) alle Montageelement-Aufnahmen (5) durch die Abdeckung (9) abgedeckt werden und wenigstens eine Kabelhaltervorrichtungs-Aufnahme (7) von einer Abdeckungs-Seite (10) des Montageträgers (4) aus zugänglich ist.

2. Montageanordnung (1) nach Anspruch 1, wobei der Montageträger (4) und die Abdeckung (9) relativ zueinander verschoben werden können.

3. Montageanordnung (1) nach Anspruch 1 oder Anspruch 2, wobei die Montageanordnung (1) eine Führungseinrichtung (11) umfasst, mit der die Montageanordnung (1) mittels einer Verschiebungsbewegung von der Träger-Montageposition (B) an die Kabel-Montageposition (C) geführt wird.

4. Montageanordnung (1) nach einem der Ansprüche 1 bis 3, wobei in der Träger-Montageposition (B) alle der Montageelement-Aufnahmen (5) von einer Abdeckungs-Seite (10) des Montageträgers (4) aus zugänglich sind.

5. Montageanordnung (1) nach einem der Ansprüche 1 bis 4, wobei in der Kabel-Montageposition (C) alle Kabelhaltervorrichtungs-Aufnahmen (7) von einer Abdeckungs-Seite (10) des Montageträgers (4) aus zugänglich sind.

6. Montageanordnung (1) nach einem der Ansprüche 1 bis 5, wobei in der Träger-Montageposition (B) alle Kabelhaltervorrichtungs-Aufnahmen (7) durch die Abdeckung (9) abgedeckt werden.

7. Montageanordnung (1) nach einem der Ansprüche 1 bis 6, wobei die Montageelement-Aufnahme ein Durchgangsloch umfasst.

8. Montageanordnung (1) nach einem der Ansprüche 1 bis 7, wobei die Kabelhaltervorrichtungs-Aufnahme (7) ein Durchgangsloch (17) umfasst.

9. Montageanordnung (1) nach einem der Ansprüche 1 bis 8, wobei die Abdeckung (9) Durchgangslöcher (19) umfasst, die in der Kabel-Montageposition (C) mit den Durchgangslöchern (17) in dem Montageträger (4) fluchtend sind.

10. Montageanordnung (1) nach einem der Ansprüche 1 bis 9, wobei die Kabelhaltervorrichtungs-Aufnahme (7) eine Fassung (70) für eine Kabelschelle (80) ist.

11. Montageanordnung (1) nach einem der Ansprüche 1 bis 10, wobei die Montageanordnung (1) eine Verriegelung (12) umfasst, die so eingerichtet ist, dass sie die Montageanordnung (1) in der Kabel-Montageposition(C) hält.

12. Montageanordnung (1) nach einem der Ansprüche 1 bis 11, wobei die Montageanordnung (1) des Weiteren wenigstens eine Kabelhaltervorrichtung (8) für das Kabel (2) umfasst und die Kabelhaltervorrichtung (8) verhindert, dass sich die Montageanordnung (1) von der Kabel-Montageposition(C) an die Träger-Montageposition (B) bewegt, wenn sie an dem Montageträger (4) angebracht ist.

13. Montageanordnung (1) nach einem der Ansprüche 1 bis 12, wobei die Abdeckung (9) wenigstens ein Zugangsloch (19) zum Zugang zu den Montageelementen durch die Abdeckung hindurch umfasst.

14. Montageanordnung (1) nach einem der Ansprüche 1 bis 13, wobei die Abdeckung (9) eine isolierende Sperre zwischen dem Kabel (2) und der elektrisch leitenden Struktur (3) bildet, um die elektrisch leitende Struktur (3) vor elektrischer Lichtbogenbildung oder Kurzschlüssen zu schützen , wenn ein Kabel beschädigt wird, da keine direkte Verbindung von dem Kabel (2) zu dem Montageelement (6) vorhanden ist.

15. Bausatz (100) für eine Montageanordnung (1) nach einem der Ansprüche 1 bis 14, der einen Montageträger (4) und eine Abdeckung (9) umfasst.

## Revendications

1. Ensemble de montage (1) pour monter au moins un câble (2) sur une structure électroconductrice (3), comportant une fixation de montage (4) qui comprend au moins un réceptacle d'élément de montage (5) adapté pour recevoir au moins un élément de montage (6) afin de monter la fixation de montage (4) sur la structure (3) et qui comprend en outre au moins un réceptacle de dispositif de support de câble (7) adapté pour recevoir au moins un dispositif de support de câble (8) pour maintenir ledit au moins un câble (2) et l'ensemble de montage (1) comprenant en outre un couvercle (9) qui est monté sur la fixation de montage (4), dans lequel la fixation de montage (4) et le couvercle (9) sont mobiles l'un par rapport à l'autre depuis une position de montage de fixation (B) jusqu'à une position de montage de câble (C), dans lequel, dans la position de montage de fixation (B), au moins un réceptacle d'élément de montage (5) est accessible depuis un côté couvercle (10) de la fixation de montage (4) et au moins un réceptacle de dispositif de support de câble (7) est recouvert par le couvercle (9), et dans lequel, dans la position de montage de câble (C), tous les réceptacles d'élément de montage (5) sont recouverts par le couvercle (9) et au moins un réceptacle de dispositif de support de câble (7) est accessible depuis un côté couvercle (10) de la fixation de montage (4).

2. Ensemble de montage (1) selon la revendication 1, dans lequel la fixation de montage (4) et le couvercle (9) peuvent coulisser l'un par rapport à l'autre.

3. Ensemble de montage (1) selon la revendication 1 ou 2, dans lequel l'ensemble de montage (1) comprend un moyen de guidage (11) pour guider l'ensemble de montage (1) depuis la position de montage de fixation (B) jusqu'à la position de montage de câble (C) par un mouvement coulissant.

4. Ensemble de montage (1) selon l'une des revendications 1 à 3, dans lequel, dans la position de montage de fixation (B), tous les réceptacles d'élément de montage (5) sont accessibles depuis un côté couvercle (10) de la fixation de montage (4).

5. Ensemble de montage (1) selon l'une des revendications 1 à 4, dans lequel, dans la position de montage de câble (C), tous les réceptacles de dispositif de support de câble (7) sont accessibles depuis un côté couvercle (10) de la fixation de montage (4).

6. Ensemble de montage (1) selon l'une des revendications 1 à 5, dans lequel, dans la position de montage de fixation (B), tous les réceptacles de dispositif de support de câble (7) sont recouverts par le couvercle (9).

7. Ensemble de montage (1) selon l'une des revendications 1 à 6, dans lequel le réceptacle d'élément de montage comprend un trou traversant.

8. Ensemble de montage (1) selon l'une des revendications 1 à 7, dans lequel le réceptacle de dispositif de support de câble (7) comprend un trou traversant (17).

9. Ensemble de montage (1) selon l'une des revendications 1 à 8, dans lequel le couvercle (9) comprend des trous traversants (19) qui sont alignés avec des trous traversants (17) dans la fixation de montage (4) en position de montage de câble (C).

10. Ensemble de montage (1) selon l'une des revendications 1 à 9, dans lequel le réceptacle de dispositif de support de câble (7) est une douille (70) pour un clip de câble (80) .

11. Ensemble de montage (1) selon l'une des revendications 1 à 10, dans lequel l'ensemble de montage (1) comprend un pêne (12) adapté pour retenir l'ensemble de montage (1) dans la position de montage de câble (C).

12. Ensemble de montage (1) selon l'une des revendications 1 à 11, dans lequel l'ensemble de montage (1) comprend en outre au moins un dispositif de support de câble (8) pour le câble (2) et le dispositif de support de câble (8) empêche l'ensemble de montage (1) de se déplacer depuis la position de montage de câble (C) jusqu'à la position de montage de fixation (B) quand il est monté sur la fixation de montage (4).

13. Ensemble de montage (1) selon l'une des revendications 1 à 12, dans lequel le couvercle (9) comprend au moins un trou d'accès (19) pour accéder aux éléments de montage à travers le couvercle.

14. Ensemble de montage (1) selon l'une des revendications 1 à 13, dans lequel le couvercle (9) procure une barrière isolante entre le câble (2) et la structure électroconductrice (3) pour protéger la structure électroconductrice (3) d'une formation d'arc électrique ou de courts-circuits dans le cas où un câble est endommagé car aucune ligne de visée directe n'est disponible du câble (2) à l'élément de montage (6) .

15. Kit (100) pour un ensemble de montage (1) selon l'une des revendications 1 à 14, comprenant une fixation de montage (4) et un couvercle (9).
